# EUROPÄISCHE PATENTSCHRIFT

(11) **EP 1 007 938 B1**
(45) Veröffentlichungstag und Bekanntmachung des Hinweises auf die Patenterteilung: **09.07.2003**
(21) Anmeldenummer: 98921347.5
(22) Anmeldetag: 09.03.1998
(51) Int. Cl.: G01N 1/34, G01N 1/22

(54) **VORRICHTUNG UND VERFAHREN ZUR PROBEENTNAHME IN FLUIDEN PHASEN MIT EINEM DIFFUSIONSKÖRPER UND EINER ANALYTBINDENDEN PHASE**
DEVICE AND METHOD FOR SAMPLING IN LIQUID PHASES USING A DIFFUSION BODY AND AN ANALYTE-BINDING PHASE
DISPOSITIF ET PROCEDE POUR PRELEVER DES ECHANTILLONS DANS DES PHASES FLUIDES AVEC UN CORPS DE DIFFUSION ET UNE PHASE DE FIXATION DE L'ANALYTE

(30) Priorität: 14.03.1997 DE 19710525
(43) Veröffentlichungstag der Anmeldung: 14.06.2000
(73) Patentinhaber: Cammann, Karl, 48155 Münster (DE)
(72) Erfinder: CAMMANN, Karl, D-48155 Münster (DE); BRENDEL, Thomas, 64380 Rossdorf (DE)
(74) Vertreter: Sparing - Röhl - Henseler Patentanwälte
(86) Internationale Anmeldenummer: DE9800705
(87) Internationale Veröffentlichungsnummer: WO98041838

(56) Entgegenhaltungen:
- EP-A- 0 714 020
- WO-A-95/05591
- WO-A-96/07885
- DE-A- 3 735 307
- DE-C- 19 538 075
- US-A- 4 240 912
- JOENSSON J A ET AL: "SUPPORTED LIQUID MEMBRANE TECHNIQUES FOR SAMPLE PREPARATION AND ENRICHMENT IN ENVIRONMENTAL AND BIOLOGICAL ANALYSIS" TRAC, TRENDS IN ANALYTICAL CHEMISTRY, Bd. 11, Nr. 3, 1. März 1992, Seiten 106-114, XP000258297

## Beschreibung

Die vorliegende Erfindung betrifft einen Diffusionssammler zur sog. passiven Probennahme gasförmiger bzw. in einer Flüssigkeit gelöster Analyte (Spenderphase) mit einer semipermeablen, die Analyten bevorzugende, transportkontrollierenden Diffusionsmembran und einem anlaytselektiven Ad- oder Absorptionsmittel zur Anreicherung der Analyte (Sammel- oder Empfängerphase).

Das Hauptanwendungsgebiet der erfindungsgemäßen Vorrichtung ist die Überwachung umweltrelevanter Substanzen, hauptsächlich in Luft- und Wasserproben (bzw. Sammlung flüchtiger Analyte in Bodenproben). Die Vorteile der passiven Probenahme, wie Einfachheit (Plakettenaufbau) und keinerlei Energiebedarf sind hinlänglich bekannt. Zur Umweltüberwachung besteht ein großer Bedarf an einfach aufgebauten und einfach zu verwendenden Passivprobensammler, die die interessierenden Stoffe (Analyte) in wesentlich kürzerer Zeit erfassen können, damit man auch kurzzeitige Spitzenwerte feststellen kann. Für die Arbeitsplatzüberwachung fehlen entsprechend geeignete leicht am Körper zu tragende Sammelplaketten, die ohne elektrisch betriebene Pumpe auskommen und trotzdem in vergleichbaren Zeiträumen eine Beprobung erlauben.

Im Handel erhältliche Diffusionsprobennehmer zur Erfassung flüchtiger Stoffe basieren hauptsächlich auf Aktivkohle als wenig spezifischem Adsorptionsmittel, das beispielsweise durch Waserdampf (Feuchtigkeit) stark gestört wird. Die Diffusionsfläche liegt zwischen 2 und 20 cm² und die Diffusionsstrecke beträgt ca. 10 mm. Hierdurch ergeben sich stoffspezifische Aufnahmeraten von nur 5 bis 50 cm³/min. Da die Analyte von der Aktivkohle fast ausschließlich durch eine Lösungsmitteluation wieder desorbiert werden können, hierbei jedoch eine Verdünnung mit dem Lösungsmittel stattfindet, sind diese Sammler fast ausschließlich für hohe Analytkonzentrationen und lange Probennahmezeiten (mehrere Stunden bis einige Wochen) geeignet.

Die auf organischen Polymeren o.ä. basierenden Diffusionsprobennehmer, bei denen neben der Lösungsmitteldesorption meist auch die effektivere, thermische Desorption möglich ist, basieren fast alle auf Glasröhrchen, wie sie von der aktiven Probennahme mittels einer Pumpe her bekannt sind. Diese Sammler haben jedoch nur einen geringen Diffusionsquerschnitt (ca. 0,1 cm²) und bei einer Diffusionsstrecke von >>10 mm resultieren daraus sehr geringe Aufnahmeraten von weniger als 0,5 cm³/min, die keine Kurzzeitmessungen erlauben. Daraus ergibt sich, daß die mit diesen Systemen erzielbaren Nachweisgrenzen für die Umweltspurenanalytik unzureichend sind.

In der EP 0 714 020 A3 wird eine Vorrichtung zur Probennahme flüchtiger Stoffe mit einem Diffusionskörper und einem Mittel zur Adsorption zu erfassender flüchtiger Stoffe beschrieben. Hier wird eine radialsymmetrische Anordnung einer zentralen Sammelphase konzentrisch innerhalb eines zylinderförmigen Diffusionskörpers offengelegt. Die Diffusionsstrecke ist gegenüber herkömmlichen Vorrichtungen wesentlich verkürzt, wodurch sich zwar ein besseres Oberflächen-Diffusionsweg-Verhältnis ergibt, jedoch beträgt der Diffusionsweg immer noch über einen Millimeter und enthält keinerlei Vorkehrungen zur Selektivitätssteigerung der zu erfassenden Analyte. Insbesondere gelangt bei dieser Vorrichtung die bei der späteren Analyse stark störende Feuchtigkeit ungehindert in die Sammelphase. Desweiteren ist der Aufbau mit zentraler Sammelpatrone und offenen Seitenflächen (Stahldrahtgitter) kompliziert und erschwert die Verwendung feinporiger oder flüssiger Sammelphasen, die dann durch das Metallgitter herausfallen. Aus Stabilitätsgründen werden dabei große Oberflächenbereiche der Sammelphase durch das Metall abgedeckt und verringern die effektive Eindiffusionsoberfläche. Darüber hinaus muß diese Vorrichtung bei der späteren thermischen Desorption auseinandergenommen werden, um die Sammelphase schnell und effektiv durch engen Kontakt mit beheizten Flächen aufzuheizen. Dabei können Störkomponenten eindringen und das Ergebnis verfälschen. Durch den Luftspalt zwischen dem zylinderförmigen äußeren Kunststoffkörper und dem zentralsymmetrischen Sammelröhrchen läßt sich diese Vorrichtung nicht zur passiven Probenahme bei flüssigen Proben verwenden. Muß man wegen schwerer flüchtiger Analyte eine Lösungsmitteleluation durchführen, so benötigt man hier wegen der röhrchenförmigen Adsorptionskartusche mit offenem Umfang wieder ein exakt passendes Eluationsgefäß, das verhindert, daß das Lösungsmittel durch das Metallgeflecht ausdringt. Dadurch ergeben sich aber kleine Spalten und Ritze, die als sog. Totvolumen die Auswaschung der gesammelten Analyte verzögern und die gewünschte quantitative Überführung in ein Analysensystem nur mit einer großen Verdünnung erreichen.

Aus der DE 37 35 307 ist ein Diffusionssammler bekannt, der eine Sammelphase aufweist, die über eine durch Wandungen begrenzte kanalförmige Beruhigungsstrecke mit der den nachzuweisenden Analyten enthaltenden Phase in Kontakt steht. Das Gehäuse kann dabei mit Perforationen versehen sein, die die Zuführung von Wasserdampf zum Austreiben der in der Sammelphase angereicherten Substanz erlauben.

Aus WO 96/07885 A1 ist ein Sammler für chemische Analysen bekannt, bei dem eine Aufnahme für Analyten mit einer Membran abgedeckt ist und an der Aufnahme an jeweils entgegengesetzten Enden ein Ein- und ein Auslaß vorhanden sind. Bei diesem Sammler handelt es sich jedoch lediglich um einen Filter, mit dem eine membranspezifische Separation und Weiterleitung der separierten Stoffe zu einer Vorrichtung mit der eine chemische Analyse durchführbar ist.

Von J. A. Jönsson und L. Mathiasson sind in "Supported liquid membran techniques for sample preparation and enrichment in environmental and biological analysis"; Trends in Analytical Chemistry; 11(1992) March; No. 3, Amsterdam S. 106 - 114 Möglichkeiten zum Sammeln, Präparieren und Anreichern von Analyten beschrieben. Dabei wird eine Flüssig-membran sowie ein Donator - Akzeptor- Komplex verwendet, um mittels der Membran eine gezielte Separation, die durch den spezifischen Donator - Akzeptor - Komplex zumindest unterstützt wird, verwendet. Außerdem wird der Stofftransport durch die Membran mit Pumpen unterstützt, so daß es sich hier nur äußerst bedingt um passiv ablaufende Prozesse handelt, die nicht ohne weiteres an jedem Ort unter verschiedensten Bedingungen durchgeführt werden können. So können beispielsweise neutrale Stoffkomponenten beiderseits der Membran nur jeweils gleiche Konzentrationen erreichen.

Ausgehend von den Nachteilen des Standes der Technik liegt der Erfindung die Aufgabe zugrunde, einen Diffusionssammler und ein Verfahren zur passiven Probenahme mittels eines Diffusionssammlers zu schaffen, welche wenig störanfällig sind, auch in Flüssigkeiten einsetzbar sind und eine vollständige Auswertung der Probe gestatten. Die Vorrichtung sollte einen kompakten Aufbau aufweisen und vielseitig verwendbar sein.

Diese Aufgabe wird gelöst durch einen Diffusionssammler nach Anspruch 1 und ein Verfahren zur passiven Probenahme mittels eines Diffusionssammlers nach Anspruch 18. Die jeweiligen Unteransprüche betreffen bevorzugte und vorteilhafte Ausgestaltungen der Erfindung.

Der erfindungsgemäße Diffusionssammler für in fluiden Phasen enthaltene gasförmige Analyte weist ein planares Gehäuse mit mindestens einer kanalartigen Vertiefung auf, in die eine Sammelphase eingelagert ist. Die Sammelphase ist von einer für den Analyten durchlässigen Diffusionsmembran abgedeckt.

Neben der analytoptimierten Diffusionsmembran und/oder Sammelphase ist der planare Aufbau und die in dünner Schichtdicke aufgebrachte Sammelphase wesentlich für diese Vorrichtung und insbesondere die Tatsache, daß nach erfolgter Probenahme die gesammelten und angereicherten Analyte durch einen gasförmigen oder flüssigen Transportstrom aus der kanalartigen Vertiefung entfernt werden, der nahezu senkrecht auf der Diffusionsrichtung steht und die gesamte kanalförmig angeordnete Sammelphase durchströmt. Der Sammelkanal entspricht erfindungsgemäß strömungstechnisch einer aufgeschnittenen chromatographischen Säule. Durch den völligen Abschluß der eigentlichen Empfängerphase ist die Vorrichtung extrem einfach zu bedienen. Für die Eluation der gesammelten Analyte mit einer Flüssigkeit muß nichts demontiert werden, da das Gehäuse mit mindestens einer Zuleitung und mindestens einer Ableitung versehen ist, welche mit dem Sammelkanal in Verbindung stehen.

Auch für den Transport der gesammelten Analyte durch ein Carriergas und Temperaturerhöhung (Thermodesorption) in die betreffende Analysenapparatur muß die erfindungsgemäße Vorrichtung nicht demontiert werden. erfindungsgemäße Vorrichtung nicht demontiert werden. Durch einen geschlossenen Aufbau wird dabei sichergestellt, daß dabei keine Fremdstoffe eindringen. Durch eine passende und dichte Abdeckung der Absorptionsfläche und der Anschlußnippel kann die Vorrichtung ohne Verfälschung gelagert oder transportiert werden. Die Abdeckung der Absorptionsfläche bleibt während der Desorption oder der Ausspülung mit einem Lösungsmittel bestehen.

Hierdurch ist eine effektive Analytüberführung, z.B. mittels thermischer Desorption möglich. Dieser Verzicht auf jegliche Demontage und damit der Schutz vor einem weiteren Kontakt mit der Umgebung ist für zuverlässige Spurenanalysen ein muß.

Erfindungsgemäß kann ein vorteilhafter größerer Diffusionsquerschnitt, eine geringere Diffusionsstrecke und eine effizientere Analytüberführung in ein Analysengerät durch mehrere Maßnahmen erreicht werden, die allein oder zusammen das Ziel universellerer Einsetzbarkeit garantieren. Dadurch ist eine Verbesserung der analytischen Erfassungsgrenzen und eine drastische Erhöhung der Beprobungsfrequenzen (Steigerung des zeitlichen Auflösungsvermögens) möglich. Als treibende Kraft für den Transport der Analyte durch die Membran kann Osmose dienen.

Bei einem planaren, laminatähnlichen Aufbau des Diffusionssammlers wird eine dünne, transporthindernde und semipermeable Membran direkt über das Adsorbens (Empfängerphase) gespannt, wodurch die Diffusionsstrecke fast gegen Null geht. Bei einem gleichzeitig vorhandenen großen Diffusionsquerschnitt sind so sehr hohe Aufnahmeraten bei gleichzeitiger Abtrennung stöschneiderte Diffusionsmembranen möglich. So lassen sich beispielsweise die Störungen durch Feuchtigkeit dadurch umgehen, daß hydrophobe, gasdurchlässige Membranen mit Dicken von unter 1 mm und Porenweiten zwischen 0,01 und 100 µm aus PTFE (Teflon®, Porenweite <10 µm), Goretex oder einem anderen wasserabstoßendem Material (z.B. Silikongummi, Siloxane, etc.) verwendet werden. Dadurch können sogar auch in Flüssigkeiten gelöste Gase passiv gesammelt werden. Umgekehrt lassen sich beispielsweise auch polarere Analyten durch hydrophile Membranmaterialien bevorzugt transportieren und damit sammeln. Als hydrophile bzw. für das betreffende Lösungsmittel permeable Membran mit typischen Dicken von 10-1000 µm und Porengrößen von 10-1000 µm (z.B. Dialysemembranen) kommen solche aus chemikalienfesten Materialien wie Celluloseester, PVC, Polyarethon oder anderen Kunststoffen mit Diffusionskanälen im Mikrometerbereich oder chemisch oberflächenmodifizierte Fritten in Betracht. Zur Sammlung schwerer flüchtiger Analyte aus Flüssigkeiten werden erfindungsgemäß Membranen mit fluidähnlichen Transportvermögen eingesetzt.

Erfindungsgemäß kann die Selektivität dieser Diffusionsmembranen, die in der passiven Probenahme zunächst nur die Aufgabe haben, unterschiedliche Konvektionen bei der Probenahme auszugleichen, dadurch gesteigert werden, daß man bei Analytmolekülen die Membranporenweite und die Polarität den zu erfassenden Analyten angleicht, was für einen Fachmann kein den Analyten angleicht, was für einen Fachmann kein Problem darstellt. Bei Analytionen wird zum Transport durch diese Diffusionsmembran ein mehr oder weniger selektiver Carrier (Ionophor) innerhalb der Membranphase zusammen mit einem Ladungsausgleich benötigt. Dabei kann entweder das Ionophor selbst oder ein weiteres membranphasengebundenes Gegenion den Ladungsausgleich besorgen, so daß das Analytion als Ionenpaar durch die dünne Membranphase transportiert wird. Auch Komplexbildner und Gastmoleküle eignen sich als Membrantransportpartner. Erfindungsgemäß können alle Erkenntnisse des aktiven und passiven Membrantransportes auf diese neue Probenahmevorrichtung angewandt werden.

Die Sammelphasen werden bevorzugt mit Dicken zwischen 0,01 bis 10 mm eingesetzt, wobei die der Membran zugewandte Oberfläche maximiert sein kann. Die Sammelphasen können so auch auf mehr als einer Seite von einer Membran abgedeckt sein.

Eine weitere erfindungsgemäße Maßnahme trägt zusätzlich zur Vermeidung von Störungen bei und verhindert eine Überladung der Empfänger- oder Sammelphase mit Störkomponenten vor allem, wenn letztere im großen Überschuß vorliegen. Dazu müssen die zu bestimmenden Analyte im Bereich hinter der Diffusionsmembran mehr oder weniger selektiv von einem dort stationär bleibenden Reaktionspartner gebunden werden, so daß sich über der Membran nur für die zu sammelnden Stoffe ein Konzentrationsgradient ausbildet, der zu einer analytspezifischen Diffusionsrate führt, die von der Analytkonzentration im angrenzenden Probenraum (Spenderphase) abhängt.

In der Empfänger- bzw. Sammelphase sollte demnach durch selektive chemische, biochemische oder physikochemische Maßnahmen dafür Sorge getragen werden, daß zumindest während der Probenahme die Konzentration an freien Analyten um Größenordnungen (>>10) kleiner als in der Spenderphase gehalten wird. Diese Herabsetzung der Konzentration an freien Analyten in einer festen, glasartigen, flüssigen, pulver- oder gelförmigen Sammelphase, wie sie z.B. aus der Gas-Chromatographie als stationäre Phasen bekannt sind, kann reversibel oder nicht-reversibel erfolgen. Im ersten Fall werden die Analyte nach der Probenahme durch physikalische oder physikochemische Effekte (z.B. Thermodesorption) wieder freigesetzt im zweiten Fall werden sie zusammen mit dem selektiven Reagenz als neue Verbindungsklasse aus der Sammelphase vorzugsweise mittels eines geeigneten Lösungsmittels zur Analyse entfernt. Beispielhafte Sammelphasen für den ersten Fall sind: Tenax® TA (Polymer des 2,5-Diphenyl-p-phenylenoxid), Aktivkohle, Kokosnußschalenkohle, Carbotrap C (graphitisierter Ruß), Carboxen, Carbowax-Phasen, organische oder anorganische Molekularsiebe, trägergebundene oder freie hochsiedende Polymerphasen, Silikagel, reversed Phase stationäres chromatographisches Material, reagenzienüberzogenes Trägermaterial feinster Körnung (>> 100 µm) z.B. für Aldehyde: mit 2,4-Denitrophenylhydrazin überzogenes Silicagel. Als den Analyt selektiv bindende Reagenzien in der Sammelphase eignen sich alle bekannten Nachweisreagenzien für den betreffenden Analyten, wobei z.B. Niederschläge, Komplexe oder lonenpaare entstehen.

Weiterhin ist neben einer elektrochemischen Auswertung auch eine Direktanzeige der Analytmenge auf dem Adsorbens möglich, falls das selektive Analytbindungsresgenz eine mit dem Auge sichtbare Anfärbung liefert. Letztere läßt sich dann mittels Vergleichsfarbtafeln halbqantitativ auswerten. Die analytspezifische Färbung läßt sich innerhalb oder außerhalb der Vorrichtung vermessen. Bei einer Messung unter Verbleib in der Vorrichtung ist der Grundkörper aus einem durchsichtigen Material (Glas, Kunststoff).

Bevorzugte Ausgestaltungen und Weiterbildungen der Erfindung ergeben sich aus den Ausführungsbeispielen und den Figuren. Es zeigen:
- Fig. 1:: einen Querschnitt durch einen erfindungsgemäßen Diffusionssammler und
- Fig. 2:: den erfindungsgemäßen Diffusionssammler nach Fig. 1 in Aufsicht.

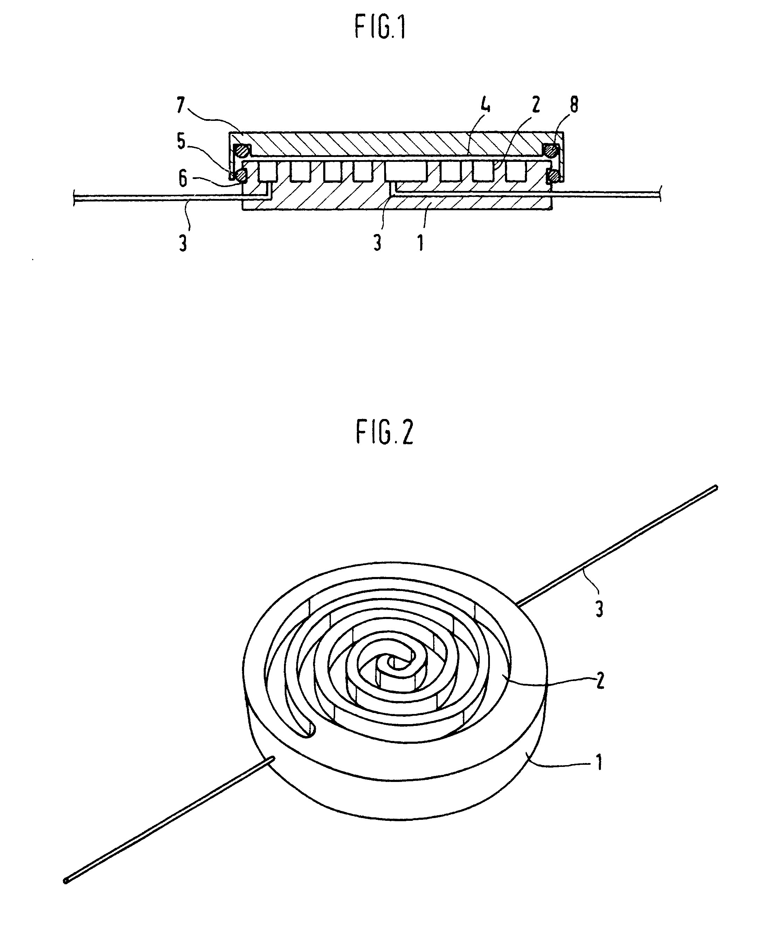

Eine der vielen möglichen Realisierungen der erfindungsgemäßen Vorrichtung gemäß den Figuren 1 und 2 ist derart ausgestaltet, daß der Probenehmer die Form einer tragbaren Plakette aufweist und beispielsweise aus einer flachen Messingscheibe 1 von ca. 40 mm Durchmesser und ca. 8 mm Dicke besteht, in der eine spiralförmige Nut als Eluationskanal 2 von einer Tiefe und Breite im Mikro- bis Millimeterbereich eingearbeitet ist. Dieser Kanal ist, wie die Fig. 2 zeigt, an den beiden Enden von außen durch die Rohrleitungen 3 in Form von Edelstahlkapillaren zugänglich. Die Diffusionsmembranen 4 werden mit einem Halte-O-Ring 5 und einer entsprechenden Vertiefung 6 im Grundkörper 1 fixiert. Ein zusätzlicher Transportdeckel 7 kann mittels eines weiteren Dichtungsrings 8 die Probenahmevorrichtung zur Lagerung oder zum Transport abdichten.

Bei einer Bauweise aus Messing bzw. Teflon, PTFE, einem auf Silikon oder Siloxan basierenden Material oder einem analogen Nucleopore-Material als Membranmaterial können Thermodesorptions-Temperaturen > 200 °C angewandt werden. Die Materialien sollten bis mindestens 400 °C temperaturbeständig sein. Die genaue Form der Eluationskanäle und das Material des Grundkörpers (schneckenförmig oder mäanderförmig) ist unerheblich und richtet sich nach dem betreffenden Anwendungsfall. Wenn eine Thermodesorption durchgeführt wird, werden vorzugsweise nicht korrodierende Metalle oder Legierungen dazu verwendet. Im Falle einer Lösungsmittelextraktion werden chemisch resistente Kunststoffe dazu verwendet.

Bei einer Nutlänge von ca. 200 mm und einer Breite von ca. 2,5 mm ergibt sich ein Diffusionsquerschnitt von ca. 5 cm². In diese Nut wird die verwendete Empfängerphase (Adsorbens oder andere Sammelphase) bis zu deren Oberkante eingebracht. Über diese Scheibe wird die analytoptimierte, semipermeable Diffusionsmembran (Dicke: im Mikrometerbereich) oder deren mehrere gespannt, welche mit Hilfe eines O-Rings fixiert wird kann. In einer solchen Anordnung reicht die Sammelphase bis an die Membran heran, so daß die jeden Passivsammler charakterisierende Diffusionsstrecke fast gleich Null ist.

Alternativ kann der Diffusionskörper auch in-situ erzeugt werden, d.h. eine oder mehrere, hinsichtlich der Analyte optimierte (bevorzugter Transport) Membranen können auf der planaren Oberfläche der Vorrichtung durch Sprühen oder sog. Spin-Coating mit anschließender Polymerisation (photochemisch oder anders) aufgebracht werden. Stabile Langmuir-Blottget-Filme werden durch Eintauchen der mit der Sammelphase gefüllten Vorrichtung in einen Langmuir-Waagen Trog mit anschließender stabilisierender Polymerisation (z.B. Photopolymerisation oder chemische Polymerisation) erhalten.

In die Vorrichtung können weiterhin Zu- und Ableitungen für den gasförmigen oder flüssigen Transportstrom eingearbeitet werden, die jeweils an den beiden Enden der Nut beginnen. Das andere Ende dieser Zu- und Ableitungen kann z.B. zur Rückseite oder der Seitenfläche geführt werden. Dort erfolgt der Anschluß an die Versorgung mit dem Transportmedium und die Abführung zu einem Analysegerät. Durch eine solche Anordnung ist es erfindungsgemäß möglich, einen Transportstrom senkrecht zur Diffusionsrichtung durch das gesamte Adsorbens zu leiten, wodurch eine rasche und quantitative Desorption der Analyte ohne Peaktailing durch tote Winkel möglich wird. Die Vorrichtung läßt sich nach erfolgter Probenahme ohne weitere Vorbereitung direkt in eine entsprechende Thermodesorptions-Apparatur oder Flüssigkeits-Eluations-Apparatur einsetzen.

Bei der Verwendung von TENAX TA als Adsorbens und einer mikroporösen PTFE-Membran (Porenweite 10 µm) konnten mit einer solchen Vorrichtung bei einer Probennahmedauer von 8 h mittlere Aufnahmeraten von 30 bis 45 cm³/min erzielt werden.

Als vorteilhaft hat es sich erwiesen, während des Transportes der Vorrichtung und bei dessen Lagerung einen dicht schließenden Deckel an der membranbespannten Seite anzubringen, da so die weitere Aufnahme von Analyten außerhalb der eigentlichen Probennahmezeit vermieden wird. Dieses kann ebenso durch die Lagerung der Vorrichtung während dieser Zeit in einem luftdicht verschlossenen Behälter erfolgen.

Die absolute Größe der Vorrichtung ist unerheblich. Es sind auch Ausführungen im Millimetermaßstab mit den modernen Produktionsmethoden der Mikrosystemtechnik produzierbar, vor allem wenn die Diffusionsmembranen durch Spin-Coating auf einem Wafer mit vielen Vorrichtungen zusammen durchgeführt wird.

### Beispiele:

### 1. Probenahme von BETX

Zur Bestimmung von Benzen, Ethylbenzen, Toluen, p-Xylen, m-Xylen und o-Xylen in extrem geringen Innenraumkonzentrationen wurden als Empfängerphase ca. 250 mg Tenax TA verwendet, das fest gepackt in die Kanäle der Vorrichtung gepreßt wurde. Damit ergab sich ein Querschnitt für die Diffusionsgrenzfläche von 5,25 cm². Als Diffusionskörper wurde eine PTFE-Membran mit einer mittleren Porenweite von 10 µm verwendet. Die Diffusionsdicke lag bei << 1 mm. Zur Freisetzung der Analyte wurde die Technik der Thermodesorption angewandt. Als Analysengerät diente ein Gaschromatograph mit AED.

Eine derartige erfindungsgemäße Vorrichtung in Form einer ansteckbaren Plakette ermöglicht beispielsweise Probensammelraten von ca. 1 1/h für Benzen, 2,5 1/h für Ethylbenzen, 2 1/h für Toluen, 2,5 1/h für p-Xylen, 2,3 1/h für m-Xylen und 1,6 1/h für o-Xylen. Die erzielbaren Nachweisgrenzen liegen im pg-Bereich. Verglichen zum Stand der Technik verkürzt der erfindungsgemäße Passivprobensammler die Sammelphase auf ca. 1/10. Dies stellt einen großen Vorteil dar, da dann auch kleinere zeitliche Schwankungen der Analyte erfaßt werden können.

Die erfindungsgemäße Vorrichtung verkürzt die Sammelzeit verglichen mit dem Stand der Technik dabei auf ca. < 20 %.

### 2. Probenahme und Messung von Ozon in Luft

Hierzu wird ein Grundkörper der oben erwähnten Form und Abmessungen in einem durchsichtigen Kunststoff (z.B. Plexiglas®) verwendet. Als Diffusionskörper dient eine gestreckte Teflonmembran von < 50 µm Dicke und einem mittleren Porendurchmesser von < 10 µm. Als Empfängerphase wird ein wäßriges Gel (Agar-Agar) mit ca. 5 % Kaliumjodid und < 5 % Stärke (z.B. Kartoffelstärke) mit einem Zusatz von 5 % Magnesiumnitrat verwendet. Nach einer vorgegebenen Sammelzeit wird die blau-schwarze Verfärbung der Sammelphase durch Vergleich mit Farbtafeln in eine Ozonkonzentration "umgerechnet". So können ppb-Mengen innerhalb weniger Stunden einfach ermittelt werden.

## Patentansprüche

1. Diffusionssammler für in fluiden Phasen enthaltene gasförmige Analyte mit einem Gehäuse, das mindestens eine kanalartige Vertiefung aufweist, die mit einer für den Analyten durchlässigen Diffusionsmembran abgedeckt ist, und an der Vertiefung eine Zu- und eine Ableitung vorhanden sind,
**dadurch gekennzeichnet,**
**daß** in der mit der hydrophoben Diffusionsmembran (4) abgdeckten kanalartigen Vertiefung (2) ein analytselektives Ad- oder Absorptionsmittel zur Anreicherung der Analyte eingelagert ist.

2. Diffusionssammler nach Anspruch 1, **dadurch gekennzeichnet,**
**daß** Zuleitung (3) und Ableitung (3) jeweils an entgegengesetzten Enden einer kanalförmigen Vertiefung (2) angeordnet sind.

3. Diffusionssammler nach einem der vorhergehenden Ansprüche, **dadurch gekennzeichnet,**
**daß** die mindestens eine Zuführung (3) und mindestens eine Abführung (3) als Kapillaren ausgestaltet sind.

4. Diffusionssammler nach einem der vorhergehenden Ansprüche, **dadurch gekennzeichnet,**
**daß** die Sammelphase und die den Analyten enthaltende Phase durch die Membran (4) getrennt laminaturartig aneinandergrenzen und die Diffusionsstrecke zwischen den beiden Phasen weniger als 1 mm beträgt.

5. Diffusionssammler nach einem der vorhergehenden Ansprüche, **dadurch gekennzeichnet,**
**daß** die mindestens eine kanalförmige Vertiefung (2) spiralförmig ausgebildet ist.

6. Diffusionssammler nach einem der vorhergehenden Ansprüche, **dadurch gekennzeichnet,**
**daß** Gehäuse (1) und Membran (4) aus einem temperaturbeständigen Material gefertigt sind.

7. Diffusionssammler nach einem der vorhergehenden Ansprüche, **dadurch gekennzeichnet,**
**daß** der Diffusionssammler weiterhin eine dicht schließende Abdeckung für die Sammelphase aufweist.

8. Diffusionssammler nach einem der vorhergehenden Ansprüche, **dadurch gekennzeichnet,**
**daß** die Sammelphase mindestens eine den Analyten selektiv bindende Phase enthält.

9. Diffusionssammler nach einem der vorhergehenden Ansprüche, **dadurch gekennzeichnet,**
**daß** die Sammelphase mindestens eine den Analyten selektiv umsetzende Phase enthält.

10. Diffusionssammler nach einem der vorhergehenden Ansprüche, **dadurch gekennzeichnet,**
**daß** die Sammelphase an einer der Membran (4) zugewandten Seite oberflächenmaximiert ist.

11. Diffusionssammler nach einem der vorhergehenden Ansprüche, **dadurch gekennzeichnet,**
**daß** die Sammelphase auf zwei oder mehr Seiten von einer Membran (4) abgedeckt ist.

12. Diffusionssammler nach einem der vorhergehenden Ansprüche, **dadurch gekennzeichnet,**
**daß** die Membran (4) eine semipermeable Diffusionsmembran ist.

13. Diffusionssammler nach einem der vorhergehenden Ansprüche, **dadurch gekennzeichnet,**
**daß** die Membran (4) mittels eines O-Ringes (8) am Gehäuse (1) fixiert ist.

14. Diffusionssammler nach einem der vorhergehenden Ansprüche 1 bis 12, **dadurch gekennzeichnet,**
**daß** die Membran (4) in Form einer in-situ Beschichtung aufgebracht ist.

15. Diffusionssammler nach einem der vorhergehenden Ansprüche, **dadurch gekennzeichnet,**
**daß** das fluide, durch die mindestens eine kanalartige Vertiefung (2) geführte Medium ein Trägergas oder eine Trägerlösung ist.

16. Diffusionssammler nach einem der vorhergehenden Ansprüche, **dadurch gekennzeichnet,**
**daß** der Diffusionssammler als Plakette ausgebildet ist.

17. Diffusionssammler nach einem der vorhergehenden Ansprüche, **dadurch gekennzeichnet,**
**daß** die Sammelphase mindestens ein für den die Analyten geeignetes Ad- oder Absorptionsmittel enthält.

18. Verfahren zur passiven Probennahme mit einem einem Diffusionssammler nach einem der Ansprüche 1 bis 17, **dadurch gekennzeichnet, daß** der gasförmige Analyt durch eine für den Analyten durchlässige, hydrophobe Membran (4) aus der fluiden Phase in ein analytselektives Ad- oder Absorptionsmittel zur Anreicherung der Analyte diffundiert,
wobei nach der Probennahme die Sammelphase zum Austrag einer nachzuweisenden Substanz mit einem fluiden Medium durchsetzt wird und
der Austrag der nachzuweisenden Substanz senkrecht zur Diffusionsrichtung erfolgt.

19. Verfahren nach Anspruch 18, **dadurch gekennzeichnet,**
**daß** als nachzuweisende Substanz der Analyt selbst oder der Analyt in chemisch oder biochemisch umgesetzter Form ausgetragen wird.

20. Verfahren nach einem der Ansprüche 18 oder 19, **dadurch gekennzeichnet,**
**daß** zum Austrag der nachzuweisenden Substanz eine Freisetzung der nachzuweisenden Substanz mittels chemischer Solvation oder thermischer Desorption durchgeführt wird.

21. Verfahren nach einem der Ansprüche 18 bis 20, **dadurch gekennzeichnet,**
**daß** der Analyt mittels aktiver Transportmechanismen durch die Membran (4) transporiert wird.

22. Verfahren nach einem der Ansprüche 18 bis 20, **dadurch gekennzeichnet,**
**daß** der Analyt mittels passiver Transportmechanismen durch die Membran (4) transporiert wird.

23. Verfahren nach einem der Ansprüche 18 bis 20, **dadurch gekennzeichnet,**
**daß** der Analyt mittles Osmose durch die Membran (4) transportiert wird.

24. Verfahren nach einem der Ansprüche 18 bis 23, **dadurch gekennzeichnet,**
**daß** die Sammelphase nach erfolgter Probennahme kolorimetrisch ausgewertet wird.

## Claims

1. Diffusion collector for gaseous analytes contained in fluid phases, with a housing which has at least one channel-like indentation that is covered with a diffusion membrane, which is permeable for the analyte, and a feed line and a discharge line are provided at the indentation, **characterized in that** an analyte-selective adsorbent or absorbent medium for enrichment of the analytes is integrated in the channel-like indentation (2) covered with the hydrophobic diffusion membrane (4).

2. Diffusion collector according to Claim 1, **characterized in that** the feed line (3) and the discharge line (3) are in each case arranged at opposite ends of a channel-like indentation (2).

3. Diffusion collector according to one of the preceding claims, **characterized in that** the at least one feed (3) and at least one discharge (3) are configured as capillaries.

4. Diffusion collector according to one of the preceding claims, **characterized in that** the collection phase and the phase containing the analyte adjoin one another laminarly while being separated by the membrane (4), and the diffusion length between the two phases is less than 1 mm.

5. Diffusion collector according to one of the preceding claims, **characterized in that** the at least one channel-like indentation (2) is designed in the form of a spiral.

6. Diffusion collector according to one of the preceding claims, **characterized in that** the housing (1) and the membrane (4) are made of a thermally stable material.

7. Diffusion collector according to one of the preceding claims, **characterized in that** the diffusion collector furthermore has a tightly closing cover for the collection phase.

8. Diffusion collector according to one of the preceding claims, **characterized in that** the collection phase contains at least one phase that selectively binds the analyte.

9. Diffusion collector according to one of the preceding claims, **characterized in that** the collection phase contains at least one phase that selectively reacts with the analyte.

10. Diffusion collector according to one of the preceding claims, **characterized in that** the collection phase is surface-maximized on a side facing the membrane (4).

11. Diffusion collector according to one of the preceding claims, **characterized in that** the collection phase is covered on two or more sides by a membrane (4).

12. Diffusion collector according to one of the preceding claims, **characterized in that** the membrane (4) is a semipermeable diffusion membrane.

13. Diffusion collector according to one of the preceding claims, **characterized in that** the membrane (4) is fixed to the housing (1) by means of an O-ring (8).

14. Diffusion collector according to one of the preceding Claims 1 to 12, **characterized in that** the membrane (4) is applied in the form of an in-situ coating.

15. Diffusion collector according to one of the preceding claims, **characterized in that** the fluid medium fed through the at least one channel-like indentation (2) is a carrier gas or a carrier solution.

16. Diffusion collector according to one of the preceding claims, **characterized in that** the diffusion collector is designed as a badge.

17. Diffusion collector according to one of the preceding claims, **characterized in that** the collection phase contains at least one adsorbent or absorbent medium suitable for the analytes.

18. Method of passive sampling with a diffusion collector according to one of Claims 1 to 17, **characterized in that** the gaseous analyte diffuses through a hydrophobic membrane (4), which is permeable for the analyte, from the fluid phase into an analyte-selective adsorbent or absorbent medium for enrichment of the analytes, wherein a fluid medium is passed through the collection phase after the sampling, in order to extract a substance to be detected, and the extraction of the substance to be detected takes place perpendicularly to the diffusion direction.

19. Method according to Claim 18, **characterized in that** the analyte itself, or the analyte in chemically or biochemically reacted form, is extracted as the substance to be detected.

20. Method according to one of Claims 18 and 19, **characterized in that** release of the substance to be detected, by means of chemical solvation or thermal desorption, is carried out in order to extract the substance to be detected.

21. Method according to one of Claims 18 to 20, **characterized in that** the analyte is transported through the membrane (4) by means of active transport mechanisms.

22. Method according to one of Claims 18 to 20, **characterized in that** the analyte is transported through the membrane (4) by means of passive transport mechanisms.

23. Method according to one of Claims 18 to 20, **characterized in that** the analyte is transported through the membrane (4) by means of osmosis.

24. Method according to one of Claims 18 to 23, **characterized in that** the collection phase is analysed colorimetrically after the sampling has been carried out.

## Revendications

1. Collecteur de diffusion pour des analytes gazeux contenus dans des phases fluides comprenant un boîtier présentant au moins une cavité en forme de canal, qui est recouverte d'une membrane de diffusion perméable à l'analyte et sur laquelle il est prévu un conduit d'alimentation et un conduit d'évacuation, **caractérisé en ce que**, dans la cavité en forme de canal (2) recouverte par la membrane de diffusion hydrophobe, est placé un adsorbant ou absorbant sélectif de l'analyte pour enrichir les analytes.

2. Collecteur de diffusion selon la revendication 1, **caractérisé en ce que** le conduit d'alimentation (3) et le conduit d'évacuation (3) sont disposés chacun à des extrémités opposées d'une cavité en forme de canal (2).

3. Collecteur de diffusion selon l'une quelconque des revendications précédentes, **caractérisé en ce que** le conduit d'alimentation (3) et le conduit d'évacuation (3) sont en forme de capillaires.

4. Collecteur de diffusion selon l'une quelconque des revendications précédentes, **caractérisé en ce que** la phase collectrice et la phase contenant l'analyte, séparées par la membrane (4), sont adjacentes l'une à l'autre à la manière d'un stratifié et **en ce que** la distance de diffusion entre les deux phases est inférieure à 1 mm.

5. Collecteur de diffusion selon l'une quelconque des revendications précédentes, **caractérisé en ce que** la cavité au moins unique en forme de canal (2) est en spirale.

6. Collecteur de diffusion selon l'une quelconque des revendications précédentes, **caractérisé en ce que** le boîtier (1) et la membrane (4) sont réalisés dans un matériau résistant à La température.

7. Collecteur de diffusion selon l'une quelconque des revendications précédentes, **caractérisé en ce que** le collecteur de diffusion présente, en outre, un couvercle fermant de manière étanche pour la phase collectrice.

8. Collecteur de diffusion selon l'une quelconque des revendications précédentes, **caractérisé en ce que** la phase collectrice contient au moins une phase liant l'analyte de manière sélective.

9. Collecteur de diffusion selon l'une quelconque des revendications précédentes, **caractérisé en ce que** la phase collectrice contient au moins une phase transformant l'analyte de manière sélective.

10. Collecteur de diffusion selon l'une quelconque des revendications précédentes, **caractérisé en ce que** la phase collectrice est maximisée en surface sur un côté tourné vers la membrane (4).

11. Collecteur de diffusion selon l'une quelconque des revendications précédentes, **caractérisé en ce que** la phase collectrice est recouverte sur deux côtés ou plus d'une membrane (4).

12. Collecteur de diffusion selon l'une quelconque des revendications précédentes, **caractérisé en ce que** la membrane (4) est une membrane de diffusion semi-perméable.

13. Collecteur de diffusion selon l'une quelconque des revendications précédentes, **caractérisé en ce que** la membrane (4) est fixée sur le boîtier (1) au mayen d'un anneau torique (8).

14. Collecteur de diffusion selon l'une quelconque des revendications précédentes 1 à 12, **caractérisé en ce que** la membrane (4) est posée sous forme d'un revêtement in situ.

15. Collecteur de diffusion selon l'une quelconque des revendications précédentes, **caractérisé en ce que** le fluide traversant la cavité en forme de canal (2) est un gaz porteur ou une solution porteuse.

16. Collecteur de diffusion selon l'une quelconque des revendications précédentes, **caractérisé en ce que** le collecteur de diffusion est constitué par une plaquette.

17. Collecteur de diffusion selon l'une quelconque des revendications précédentes, **caractérisé en ce que** la phase collectrice contient au moins un adsorbant ou un absorbant adapté aux analytes.

18. Procédé pour le prélèvement passif d'échantillons comprenant un collecteur de diffusion selon l'une des revendications 1 à 17, **caractérisé en ce que** l'analyte gazeux diffuse à travers une membrane (4) hydrophobe, perméable à l'analyte, à partir de la phase fluide dans un adsorbant ou un absorbant sélectif de l'analyte pour enrichir les analytes, la phase collectrice étant chargée, après le prélèvement d'échantillons, avec un fluide pour évacuer une substance à tester et l'évacuation de la substance à tester s'effectuant perpendiculairement à la direction de diffusion.

19. Procédé selon la revendication 18, **caractérisé en ce que**, comme substance à tester, l'analyte lui-même ou l'analyte sous forme chimiquement ou biochimiquement transformée est évacué.

20. Procédé selon l'une quelconque des revendications 18 ou 19, **caractérisé en ce que** pour évacuer la substance à tester, une libération de la substance à tester est effectuée au moyen d'une solvatation chimique ou d'une désorption thermique.

21. Procédé selon l'une quelconque des revendications 18 à 20, **caractérisé en ce que** l'analyte est transporté à travers la membrane (4) par des mécanismes de transport actifs.

22. Procédé selon l'une quelconque des revendications 18 à 20, **caractérisé en ce que** l'analyte est transporté à travers la membrane (4) par des mécanismes de transport passifs.

23. Procédé selon l'une quelconque des revendications 18 à 20, **caractérisé en ce que** l'analyte est transporté à travers la membrane (4) par osmose.

24. Procédé selon l'une des revendications 18 à 23, **caractérisé en ce que** la phase collectrice est évaluée par colorimétrie après le prélèvement d'échantillons.
